# EUROPÄISCHE PATENTSCHRIFT

(11) **EP 3 427 978 B1**
(45) Veröffentlichungstag und Bekanntmachung des Hinweises auf die Patenterteilung: **29.01.2020**
(21) Anmeldenummer: 18167413.6
(22) Anmeldetag: 16.04.2018
(51) Int. Cl.: B60C 19/08, B60C 11/00, B60C 9/18

(54) **FAHRZEUGLUFTREIFEN**
PNEUMATIC TYRES FOR A VEHICLE
PNEUMATIQUE DE VÉHICULE

(30) Priorität: 10.07.2017 DE 102017211762
(43) Veröffentlichungstag der Anmeldung: 16.01.2019
(73) Patentinhaber: Continental Reifen Deutschland GmbH, 30165 Hannover (DE)
(72) Erfinder: Wenckel, Mathias, 30625 Hannover (DE)
(74) Vertreter: Finger, Karsten

(56) Entgegenhaltungen:
- EP-A1- 3 181 379
- DE-A1-102007 040 674
- DE-A1-102015 213 497
- DE-A1-102015 223 393
- JP-A- 2009 154 608
- JP-A- 2011 126 338

## Beschreibung

Die Erfindung betrifft einen Fahrzeugluftreifen in Radialbauart mit
- einem in radialer Richtung zweischichtig ausgeführten Laufstreifen, welcher eine äußere Laufstreifenschicht aus einem elektrisch nicht leitfähigen Gummimaterial und eine innere Laufstreifenschicht aus einem elektrisch leitfähigen oder einem elektrisch nicht leitfähigen Gummimaterial aufweist,
- einem Carboncenterbeam aus einem elektrisch leitfähigen Gummimaterial im Laufstreifen,
- einem zumindest zweilagigen Gürtel mit einer radial äußersten Gürtellage mit Festigkeitsträgern, die in eine elektrisch nicht leitfähige Gummierungsmischung eingebettet sind,
- einer als Spulbandage ausgeführten Gürtelbandage mit Festigkeitsträgern, die in eine elektrisch nicht leitfähige Gummierungsmischung eingebettet sind, wobei die Gürtelbandage die Kanten der radial äußersten Gürtellage überdeckt und überragt sowie in Umfangsrichtung zumindest eine Lücke aufweist,
- einer elektrisch leitfähig ausgestatteten Karkasseinlage,
- Seitenwänden aus einem elektrisch nicht leitfähigen Gummimaterial.

Um den Rollwiderstand vom Reifen zu reduzieren, ist es üblich, möglichst viele der aus Gummimaterialien bestehenden oder Gummimaterialien aufweisenden Reifenbauteile, beispielsweise den Laufstreifen und die Seitenwände, aus rollwiderstandsarmen Kautschukmischungen herzustellen. Derartige Kautschukmischungen enthalten entweder niedrig aktive Füllstoffe oder geringe Mengen an Füllstoff oder an Stelle von Ruß Silica. Rollwiderstandsarm ausgeführte Kautschukmischungen verleihen jedoch den daraus gefertigten Gummibauteilen einen derart hohen elektrischen Widerstand, dass diese elektrisch nicht mehr oder unzureichend leitfähig sind, sodass entsprechende Maßnahmen zur Ableitung der beim Fahren auftretenden elektrostatischen Aufladung getroffen werden müssen, indem der mit der Fahrbahn in Kontakt tretende Laufstreifen mit der metallischen Reifenfelge elektrisch leitend verbunden wird. Die elektrische Leitfähigkeit ist dabei auch bei Reifenbauteilen aus solchen Gummimaterialien zu gering, welche Ruß in sehr geringen Mengen und/oder Ruß mit einer geringen Aktivität bzw. einem kleinen BET enthalten.

Ein Reifen der eingangs genannten Art ist beispielsweise aus der EP 3 181 379 A1 bekannt. Die elektrostatische Ableitung erfolgt bei diesem Reifen über einen Carboncenterbeam, eine elektrisch leitfähige Seitenwandpassage und ein im Bereich des Gürtelverbandes befindliches, elektrisch leitfähiges Material, welches den Carboncenterbeam und die Seitenwandpassage kontaktiert. Das elektrisch leitfähige Material ist von zwei elektrisch leitfähigen Gummistreifen gebildet, von welchen der eine durch zwei benachbarte Windungen der Gürtelbandage durchgeführt ist und der andere zwischen der radial äußeren Gürtellage und der Gürtelbandage verläuft. Alternativ kann das leitfähige Material von Fäden, einem Gewebe, einer Paste, einer Sprühlösung, einem Pulver oder einem Granulat gebildet sein.

Die DE 10 2015 223 393 A1 offenbart einen Fahrzeugluftreifen mit elektrisch nicht leitfähigen Seitenwände und einem in radialer Richtung zweischichtigen Laufstreifen aus einer elektrisch leitfähigen Laufstreifenbase und einer elektrisch nicht leitfähigen, mit der Fahrbahn in Berührung kommenden Laufstreifencap. Über den Umfang der Laufstreifencap verläuft zumindest ein sogenannter Carboncenterbeam, welcher auch die Laufstreifenbase kontaktiert. Elektrisch leitfähige Fäden sind derart auf der Innenseite der Seitenwände und den elektrisch leitfähigen Bauteilen in den Wulstbereichen aufgebracht, dass diese zwischen der Laufstreifenbase und den elektrisch leitfähigen Bauteilen in den Wulstbereichen elektrisch leitfähige Passagen bilden.

Aus der EP 2 582 531 B1 ist ferner ein Fahrzeugluftreifen bekannt, dessen Karkasseinlage an zumindest einer ihrer Oberflächen mit Fäden versehen ist, welche zum Teil elektrisch leitfähig beschichtete Fäden aus Baumwolle oder PET sind.

Um den Rollwiderstand von Reifen zu reduzieren, besteht der Trend, möglichst viele Gummimaterialen im Reifen aus rollwiderstandsarmen Gummimischungen, demnach aus Gummimischungen mit einer für eine elektrostatische Ableitung unzureichenden elektrischen Leitfähigkeit, herzustellen. Neben den Seitenwänden soll daher auch der Laufstreifen komplett, also auch seine Laufstreifenbase, sowie die Gummierungsmischungen der Gürtellagen und der Gürtelbandage aus einer derartigen Gummimischung bestehen können. Dies erfordert, neuen Lösungen zur Bereitstellung elektrisch leitfähiger Verbindungen zwischen der mit dem Untergrund in Kontakt tretenden Außenfläche des Laufstreifens und der elektrisch leitenden metallischen Felge aufzufinden.

Der Erfindung liegt die Aufgabe zu Grunde, bei einem Reifen der eingangs genannten Art, bei welchem auch die Gummierungsmischungen in der Bandage und im Gürtel elektrisch nicht leitfähig sind, mit einfachen und einfach herzustellenden Maßnahmen für elektrisch leitfähige Passagen zwischen dem Laufstreifen und der Felge zu sorgen.

Gelöst wird die gestellte Aufgabe erfindungsgemäß dadurch, dass die Gürtelbandage zumindest einen Bandagestreifen aufweist, an dessen Unterseite zumindest ein parallel oder im Wesentlichen parallel zu seinen Festigkeitsträgern verlaufender elektrisch leitfähiger Faden verläuft, und dass an der Oberseite der der radial äußersten Gürtellage elektrisch leitfähige Fäden verlaufen, welche gemeinsam mit dem Faden auf der Unterseite des Bandagestreifens einen gitterartigen elektrischen Leiter bilden, wobei entweder das elektrisch leitfähige Gummimaterial des Carboncenterbeams oder die innere Laufstreifenschicht durch die zumindest eine Lücke der Gürtelbandage hindurch in Kontakt mit der Oberseite der radial äußersten Gürtellage ist,
und wobei der Faden an der Unterseite der Gürtelbandage zumindest bis in einen der Randabschnitte verläuft und bei auf einer Felge montiertem Reifen mit der Felge über elektrisch leitfähige, im Reifen befindliche Bauteile in elektrisch leitender Verbindung ist.

Durch die Erfindung wird bei einem Reifen mit elektrisch nicht leitfähigen Gummierungen in der Gürtelbandage und den Gürtellagen auf einfache und zweckmäßige Weise mittels elektrisch leitfähiger Fäden eine elektrisch leitende Verbindung zwischen dem Carboncenterbeam im Laufstreifen und zumindest einem der Randabschnitte der Gürtelbandage hergestellt. Von hier aus kann mit bekannten Maßnahmen eine elektrisch leitfähige Verbindung zur Felge erfolgen.

Bei einer bevorzugten Ausführung verlaufen die Fäden an der Oberseite der radial äußersten Gürtellage parallel zueinander, unter einem spitzen Winkel von vorzugsweise bis zu 30° zu den Windungen des Fadens an der Unterseite der Gürtelbandage und vorzugsweise über die Breite der Gürtellage. Bei einer besonders bevorzugten Ausführung verlaufen die Fäden an der Oberseite der radial äußersten Gürtellage parallel zu den Festigkeitsträgern in der Gürtellage. Auf diese einfache Weise wird ein gitterartiger elektrischer Leiter von den Fäden auf der Oberseite der Gürtellage und dem Faden an der Unterseite der Gürtelbandage gebildet. Es ist ausreichend, wenn an der Unterseite der Windungen der Gürtelbandage bzw. des Bandagestreifens jeweils ein einzelner Faden verläuft. Der gegenseitige lichte Abstand der Fadenwindungen an der Unterseite des Bandagestreifens sowie der Fäden an der Oberseite der radial äußersten Gürtellage beträgt daher bevorzugt 8,0 mm bis 15,0 mm.

Wie bereits erwähnt, erfolgt die elektrisch leitende Verbindung zur Felge ausgehend von den Fadenwindungen an der Unterseite der Gürtelbandage in zumindest einem ihrer Randabschnitte. Diese elektrisch leitende Verbindung kann auf unterschiedliche Weise erfolgen. Bei einer diesbezüglich bevorzugten Ausführung gehört zu den elektrisch leitfähigen Bauteilen, über welche der Randabschnitt der Gürtelbandage elektrisch leitend mit der Felge verbunden ist, eine elektrisch leitfähig ausgestattete bzw. ausgeführte Karkasseinlage, welche mit zumindest einem elektrisch leitfähigen, die Felge kontaktierenden Bauteil im Wulstbereich des Reifens in Kontakt steht.

Dabei kann vorgesehen sein, dass der Randabschnitt der Gürtelbandage mitsamt den an der Unterseite dieses Randabschnittes verlaufenden Windungen des Fadens die elektrisch leitfähig ausgestattete bzw. ausgeführte Karkasseinlage unmittelbar kontaktiert.

Bei einer bevorzugten Ausführung weist die Karkasseinlage entweder eine elektrisch leitfähige Karkassgummierung oder eine elektrisch nicht leitfähige Karkassgummierung auf, die in diesem Fall an ihrer Außenseite vorzugsweise mit elektrisch leitfähigen Fäden versehen ist. Eine elektrisch nicht leitfähige Karkassgummierung trägt zu einem geringen Rollwiderstand des Reifens bei.

Bei einer alternativen Ausführung gehört zu den elektrisch leitfähigen Bauteilen, über welche der Randabschnitt der Gürtelbandage elektrisch leitend mit der Felge verbunden ist, ein elektrisch leitfähig ausgestatteter bzw. ausgeführter Gürtelkantenpolster, welcher mit der elektrisch leitfähig ausgestatteten bzw. ausgeführten Karkasseinlage in Kontakt ist.

Die elektrisch leitende Verbindung vom Gürtelkantenpolster zur Karkasseinlage ist dann besonders zuverlässig, wenn der Gürtelkantenpolster die Kanten der radial innerhalb der äußeren Gürtellage angeordneten Gürtellage umgibt und einen radial inneren und einen radial äußeren Umschlagabschnitt aufweist.

Bei einer möglichen, vorteilhaften Ausführungsform kann der Gürtelkantenpolster aus einem elektrisch leitfähigen Gummimaterial bestehen.

Für einen möglichst geringen Rollwiderstand des Reifens ist es jedoch vorteilhaft, wenn der Gürtelkantenpolster aus einem elektrisch nicht leitfähigen Gummimaterial besteht, wobei an der Außenseite des Gürtelkantenpolsters zumindest ein elektrisch leitfähiger Faden derart über die Umfangserstreckung des Gürtelkantenpolsters verläuft, dass er zum Teil über den radial inneren und zum Teil über den radial äußeren Umschlagabschnitt verläuft.

Für den geringen Rollwiderstand ist es auch von Vorteil, wenn der Laufstreifen eine radial innere Laufstreifenschicht aus einem elektrisch nicht leitfähigen Gummimaterial aufweist. In diesem Fall ist eine Ausführung bevorzugt, bei der der Carboncenterbeam einen in axialer Richtung streifenförmigen, in der radial inneren Laufstreifenschicht positionierten Abschnitt aufweist, dessen Gummimaterial durch eine Lücke in der Gürtelbandage hindurch mit Fäden an der Oberseite der radial äußersten Gürtellage in Kontakt ist.

Die elektrisch leitfähigen Fäden bestehen bevorzugt aus einem elektrisch nicht leitfähigen Trägerfaden, beispielsweise aus Polyester, Polyamid, Baumwolle oder Hybriden dieser Materialen, wobei der Trägerfaden mit einer elektrisch leitfähigen Beschichtung versehen ist. Besonders vorteilhaft ist es, wenn die elektrisch leitfähigen Fäden ein Trägermaterial aufweisen, dessen Dehnungsverhalten zumindest weitgehend dem Dehnungsverhalten jener Bauteile entspricht, auf welchen die Fäden aufgebracht sind.

Die elektrisch leitfähige Beschichtung kann elektrisch leitfähige Partikel enthalten oder aus solchen bestehen, wobei die elektrisch leitfähigen Partikel beispielsweise Rußpartikel, Graphitpartikel oder Kohlenstoffnanoröhren sind.

Besonders bevorzugt ist eine Ausführung der elektrisch leitfähigen Beschichtung aus einem Haftvermittler, vorzugsweise ist die elektrisch leitfähige Beschichtung ein Resorcin-Formaldehyd-Latex-Dip, welcher elektrisch leitfähige Partikel, insbesondere Rußpartikel, enthält. Mit einer solchen Beschichtung wird der Vorteil einer elektrischen Leitfähigkeit mit dem Vorteil einer guten Haftung der Fäden am entsprechenden Reifenbauteil verbunden.

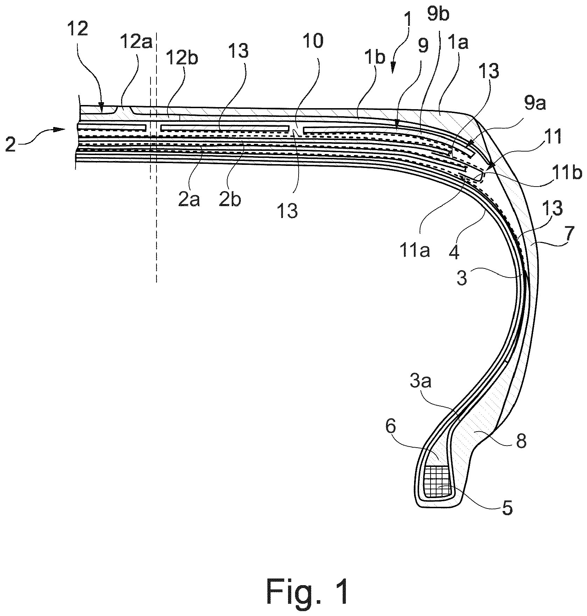

Weitere Merkmale, Vorteile und Einzelheiten der Erfindung werden nun anhand der schematischen Zeichnung, die ein Ausführungsbeispiel darstellt, näher beschrieben. Die einzige Zeichnungsfigur, Fig. 1, zeigt einen Teilquerschnitt durch einen Fahrzeugluftreifen für einen Personenkraftwagen in radialer Bauart.

In Fig. 1 sind die im Laufstreifenbereich verlaufenden Bauteile mit gegenseitigen Abständen dargestellt, die im vulkanisierten Reifen nicht vorhanden sind. Im vulkanisierten Reifen kontaktieren einander diese Bauteile.

In der nachfolgenden Beschreibung und den Patentansprüchen wird unter einem elektrisch leitfähigen Gummimaterial ein solches verstanden, welches einen elektrischen Widerstand von < 1 x 10⁸ Ohm aufweist, unter einem elektrisch nicht leitfähigen Gummimaterial wird ein solches verstanden, welches einen elektrischen Widerstand ≥ 1 x 10⁸ Ohm aufweist.

Der in Fig. 1 gezeigte Fahrzeugluftreifen weist einen Laufstreifen 1, einen radial innerhalb des Laufstreifens 1 angeordneten, bei der gezeigten Ausführung zweilagigen Gürtelverband 2 mit einer Gürtelbandage 9 auf, ferner eine Karkasseinlage 3, eine luftdichte Innenschicht 4, Wulstbereiche mit Hornprofilen 8, zugfesten Wulstkerne 5 und auf den Wulstkernen 5 sitzenden Kernprofilen 6, sowie Seitenwände 7.

Der Laufstreifen 1 ist in radialer Richtung zweischichtig aufgebaut und setzt sich aus einer eine Laufstreifenprofilierung enthaltenden äußeren Laufstreifenschicht - einer sogenannten Laufstreifencap 1a - und einer radial innerhalb der Laufstreifencap 1a befindlichen inneren Laufstreifenschicht - einer sogenannten Laufstreifenbase 1b - zusammen. Die Laufstreifenbase 1b erstreckt sich in axialer Richtung über die gesamte Breite der Laufstreifencap 1a. Die Laufstreifencap 1a besteht aus einem elektrisch nicht leitfähigen Gummimaterial, die Laufstreifenbase 1b je nach Ausführung aus einem elektrisch leitfähigen Gummimaterial oder aus einem elektrisch nicht leitfähigen Gummimaterial.

Der Gürtelverband 2 weist eine radial innere, erste Gürtellage 2a und eine radial äußere, zweite Gürtellage 2b sowie eine Gürtelbandage 9 auf. Die Gürtellagen 2a, 2b bestehen jeweils aus in eine Gürtelgummierung, die elektrisch nicht leitfähig ist, eingebetteten Festigkeitsträgern, beispielsweise Stahlkorden, welche in jeder Gürtellage 2a, 2b parallel zueinander und unter einem spitzen Winkel, welche üblicherweise im Bereich von 15° bis 28° gewählt wird, zur Umfangsrichtung des Reifens verlaufen. In bekannter Weise kreuzen die in der einen Gürtellage 2a befindlichen Festigkeitsträger jene, die in der anderen Gürtellage 2b verlaufen. Die Gürtelbandage 9 besteht aus zumindest einem Bandagestreifen 9b aus in eine Bandagengummierung, die ebenfalls elektrisch nicht leitfähig ist, eingebetteten Festigkeitsträgern, insbesondere aus einem textilen Material, beispielsweise einem Polyamid, und überdeckt und überragt gürtelrandseitig mit Randabschnitten 9a die Gürtelkanten der zweiten Gürtellage 2b. Die Festigkeitsträger in der Gürtelbandage 3 verlaufen parallel bzw. im Wesentlichen parallel zueinander in Umfangsrichtung des Reifens bzw. unter einem Winkel von insbesondere bis zu 5° zur Umfangsrichtung. Die Gürtelbandage 9 ist eine sogenannte Spulbandage und ist daher aus einem mit den Festigkeitsträgern verstärkten Kautschukmischungsband durch spiraliges Umwickeln der zweiten Gürtellage 2b erstellt worden. Durch eine an sich bekannte Lückenspulung weist die Gürtelbandage 9 über den Reifenumfang zumindest eine Lücke 10, insbesondere mehrere Lücken 10, auf. Die Randkanten der radial inneren, ersten Gürtellage 2a sind in bekannter Weise von Gürtelkantenpolstern 11 umgeben. Jeder Gürtelkantenpolster 11 ist ein Streifen aus einem Gummimaterial, welcher jeweils einen kantenseitigen Randabschnitt der Gürtellage 2a mit einem radial äußeren Umschlagabschnitt 11a an dessen Oberseite (radial äußeren Seite) und mit einem radial inneren Umschlagabschnitt 11b an dessen Unterseite (radial inneren Seite) kontaktiert. Die Gürtelkantenpolster 11 bestehen, je nach Ausführung, entweder aus einem elektrisch leitfähigen oder einem elektrisch nicht leitfähigen Gummimaterial, wie noch beschrieben wird.

Die Karkasseinlage 3 weist in bekannter Weise in eine Karkassgummierung eingebettete Festigkeitsträger auf und ist um die Wulstkerne 5 von axial innen nach axial außen in Karkasshochschlägen 3a endend herumgeführt. Die Karkassgummierung besteht, je nach Ausführung, entweder aus einem elektrisch leitfähigen oder aus einem elektrisch nicht leitfähigen Gummimaterial. Ist die Karkassgummierung elektrisch nicht leitfähig so ist sie zumindest an ihrer äußeren, der Innenschicht abgewandten Oberfläche elektrisch leitfähig ausgerüstet, wie noch beschrieben wird.

Die Seitenwände 7 bestehen aus einem elektrisch nicht leitfähigen Gummimaterial und erstrecken sich vom Laufstreifen 1 bis zum jeweiligen Hornprofil 8, welches den Karkasshochschlag 3a in radialer Richtung überragt und mit seinem überragenden Abschnitt in Kontakt mit der Außenseite der Karkasseinlage 3 ist. Im radial äußeren Bereich können die Seitenwände durch Wingprofile, welche ebenfalls aus einem elektrisch nicht leitfähigen Gummimaterial bestehen, ersetzt sein. Die Hornprofile 8 bestehen aus einem elektrisch leitfähigen Gummimaterial und sind außenseitig von den Seitenwänden 7 überlappt. Ist der Fahrzeugluftreifen auf einer nicht gezeigten Felge montiert, so sind die Hornprofile 8 mit der elektrisch leitfähigen, metallischen Felge in Kontakt. Die Hornprofile 8 können auch aus einem elektrisch nicht leitfähigen Gummimaterial bestehen und beispielsweise von einem Gummistreifen aus einem elektrisch leitfähigen Gummimaterial durchquert sein.

Die Laufstreifenbase 1b ist unmittelbar in Kontakt mit der Gürtelbandage 9, diese mit der zweiten Gürtellage 2b, die zweite Gürtellage mit der ersten Gürtellage 2a, welche sich unmittelbar auf der Karkasseinlage 3 befindet. Der radial äußere Umschlagabschnitt 11a jedes Gürtelkantenpolsters 11 wird außenseitig von dem die zweite Gürtellage 2b seitlich überragenden Randabschnitt 9a der Gürtelbandage 9 kontaktiert. Der radial innere Umschlag 11b jedes Gürtelkantenpolsters 11 kontaktiert die Außenseite der Karkasseinlage 3.

Zur Sicherstellung der Ableitung einer elektrostatischen Aufladung des Reifens sind die im Folgenden beschriebenen Maßnahmen getroffen. Der Laufstreifen 1 enthält einen Carboncenterbeam 12 (üblicherweise mit CCB bezeichnet) welcher insbesondere und vorzugsweise ein in Umfangsrichtung umlaufendes, elektrisch leitfähiger Gummiprofil ist, welches an der Außenfläche des Laufstreifens in Kontakt mit dem Untergrund kommt. Bei der in Fig. 1 gezeigten Ausführung mit einer Laufstreifenbase 1b aus einem elektrisch nicht leitfähigen Gummimaterial, besteht der Carboncenterbeam 12 aus einem die Laufstreifencap 1a in radialer Richtung durchsetzenden streifenförmigen Abschnitt 12a und einem weiteren, ebenfalls in Umfangsrichtung verlaufenden, jedoch in axialer Richtung eine gewisse Breite aufweisenden streifenförmigen Abschnitt 12b, welcher in die Laufstreifenbase 1b eingesetzt ist. Der Carboncenterbeam 12 ist derart im Laufstreifen 1 positioniert, dass sich sein Abschnitt 12b im Bereich einer Lücke 10 der Gürtelbandage 9 befindet und sein Gummimaterial beim Vulkanisieren des Reifens in einer Vulkanisationsform in die Lücke 10 eindringt und mit der Oberseite (der radial äußeren Seite) der zweiten Gürtellage 2b in Kontakt kommt. Besteht das Gummimaterial der Laufstreifenbase 1b aus einer elektrisch leitfähigen Gummimischung weist der Carboncenterbeam 12 lediglich den Abschnitt 12a auf. Beim Vulkanisieren des Reifens in einer Vulkanisationsform dringt die elektrisch leitfähige Gummimischung der Laufstreifenbase 1b in die Lücke(n) 10 ein, und kontaktiert die Oberseite der zweiten Gürtellage 2b.

Auf der Oberseite der zweiten Gürtellage 2b sowie auf der Unterseite (der radial inneren Seite) der Gürtelbandage 9 sind vorzugsweise parallel oder im Wesentlichen parallel zu den Festigkeitsträgern der jeweiligen Lagen verlaufend elektrisch leitfähige Fäden 13, die in der Figur als Punkte bzw. kurze Striche versinnbildlicht sind, aufgebracht. Auf der Gürtellage 2b befindet sich eine Mehrzahl von Fäden 13 in einem gegenseitigen Abstand von einigen Millimetern insbesondere von 8,0 mm bis 15 mm, welche vorzugsweise über die gesamte Breite der Gürtellage 2b verlaufen. An der Unterseite der Gürtelbandage 9 befindet sich zumindest ein spiralförmig in Windungen - gemeinsam mit den Windungen des Bandagestreifens 9b - umlaufender Faden 13, gegebenenfalls auch zwei Fäden 13, welcher bei der Herstellung oder beim Aufbringen der Bandage 9 auf jener Seite des Bandagestreifens 9b aufgebracht wird, die beim Wickelvorgang die Unterseite der Gürtelbandage 9 bildet. Der "endlose" Faden 13 umläuft daher analog zu den Festigkeitsträgern der Gürtelbandage 9 den Reifen in Umfangsrichtung und verläuft zumindest bis in einen der Randabschnitte 9a. Der gegenseitige Abstand der Fadenwindungen beträgt auch in der Gürtelbandage 9 vorzugsweise in der Größenordnung von 8 mm bis 15 mm. Im fertig aufgebauten und vulkanisierten Reifen sind die Fäden 13 auf der Oberseite der zweiten Gürtellage 2b in Kontakt mit den Fadenwindungen 13 an der Unterseite der Gürtelbandage 9 und bilden derart ein elektrisch leitfähiges "Gitter".

Auf der Außenseite der Karkasseinlage 3 sind, wenn diese eine elektrisch nicht leitfähige Karkassgummierung aufweist, gemäß einer bevorzugten Ausführung parallel zueinander verlaufend ebenfalls elektrisch leitfähige Fäden 13 in gegenseitigen Abständen von mindestens 60 mm aufgebracht. Diese Fäden 13 können analog zu den Festigkeitsträgern in der Karkasseinlage 3 in radialer Richtung verlaufen oder auch unter einem von der radialen Richtung um insbesondere bis zu 45° abweichenden Winkel.

Bestehen die Gürtelkantenpolster 11 aus einem elektrisch nicht leitfähigen Gummimaterial ist auf der Außenseite jedes Gürtelkantenpolsters 11 zumindest ein elektrisch leitender Faden 13 aufgebracht, welcher derart über die Umfangserstreckung des Gürtelkantenpolsters 11 verläuft, dass er zum Teil über den radial inneren und zum Teil über den radial äußeren Umschlagabschnitt 11a, 11b, sodass der Fadenabschnitt am äußeren Umschlagabschnitt 11a die Fäden 13 an der Unterseite der Gürtelbandage 9, der Fadenabschnitt am inneren Umschlagabschnitt 11b die Fäden 13 auf der Karkasseinlage 3 kontaktiert. Alternativ können mehrere, insbesondere parallel zueinander verlaufende Fäden an der Außenseite jedes Gürtelkantenpolsters 11 entsprechend aufgebracht sein.

Die elektrisch leitfähigen Fäden 13 bestehen aus einem elektrisch nicht leitfähigen Trägerfaden, beispielsweise aus Polyester, Polyamid, Baumwolle oder Hybriden der vorgenannten Materialen, und einer elektrisch leitfähigen Beschichtung. Die elektrisch leitfähige Beschichtung kann elektrisch leitende Partikel, beispielsweise Rußpartikel, Graphitpartikel oder Kohlenstoffnanoröhren, enthalten oder aus solchen Partikeln bestehen. Die elektrisch leitfähige Beschichtung kann ferner ein Haftvermittler, vorzugsweise ein RFL-Dip (Resorcin-Formaldehyd-Latex-Dip) sein, welcher elektrisch leitfähige Partikel, vorzugsweise Ruß, beispielsweise Ruß vom Typ N339, enthält. Nachdem dem Haftvermittler elektrisch leitfähige Partikel, vorzugsweise dispergiert, beigemengt sind, sind die elektrische Leitfähigkeit und zusätzlich eine gute Haftung der Fäden 13 im Reifen sichergestellt.

Insbesondere auf der Außenseite der Karkasseinlage 3 oder der Oberseite der zweiten Gürtellage 2b können die elektrisch leitfähigen Fäden auch Fäden eines Gewebes sein.

Der elektrisch leitfähige Pfad verläuft in Fig. 1 beispielsweise wie folgt. Der Carboncenterbeam 12 ist elektrisch leitend mit den Fäden 13 auf der Oberseite der zweiten Gürtellage 2b verbunden. Diese bilden gemeinsam mit den Fäden 13 an der Unterseite der Gürtelbandage 9 einen elektrisch leitenden Pfad bis zu dem die zweite Gürtellage 2b überragenden seitlichen Randabschnitt 9a der Gürtelbandage 9, dessen Faden 13 hier den Gürtelkantenpolster 11 kontaktiert. Der Gürtelkantenpolster 11 steht in Kontakt mit der Außenseite der Karkasseinlage 3, die ebenfalls mit elektrisch leitenden Fäden 13 versehen ist, von welchen aus eine elektrisch leitende Verbindung mit dem aus einem elektrisch leitenden Gummimaterial bestehenden Hornprofil 8 und von diesem auf die nicht dargestellte Felge erfolgt.

### Bezugszeichenliste

- 1......................: Laufstreifen
- 1a ....................: Laufstreifencap
- 1b ....................: Laufstreifenbase
- 2......................: Gürtelverband
- 2a, 2b...............: Gürtellage
- 3 ......................: Karkasseinlage
- 3a ....................: Karkasshochschlag
- 4 ......................: Innenschicht
- 5 ......................: Wulstkern
- 6 ......................: Kernprofil
- 7 ......................: Seitenwand
- 8 ......................: Hornprofil
- 9 ......................: Gürtelbandage
- 9a ....................: Randabschnitt
- 9b ....................: Bandagestreifen
- 10 ....................: Lücke
- 11 ....................: Gürtelkantenpolster
- 11a, 11b...........: Umschlagabschnitt
- 12 ....................: Carboncenterbeam
- 12a, 12b...........: streifenförmiger Abschnitt
- 13 ....................: Faden

## Patentansprüche

1. Fahrzeugluftreifen in Radialbauart mit
- einem in radialer Richtung zumindest zweischichtig ausgeführten Laufstreifen (1), welcher eine äußere Laufstreifenschicht (1a) aus einem elektrisch nicht leitfähigen Gummimaterial und eine innere Laufstreifenschicht (1b) aus einem elektrisch leitfähigen oder einem elektrisch nicht leitfähigen Gummimaterial aufweist,
- einem Carboncenterbeam (12) aus einem elektrisch leitfähigen Gummimaterial im Laufstreifen (1),
- einem zumindest zweilagigen Gürtel (2) mit einer radial äußersten Gürtellage (2b) mit Festigkeitsträgern, die in eine elektrisch nicht leitfähige Gummierung eingebettet sind,
- einer als Spulbandage ausgeführten Gürtelbandage (9) mit Festigkeitsträgern, die in eine elektrisch nicht leitfähige Gummierung eingebettet sind, wobei die Gürtelbandage (9) mit Randabschnitten (9a) die Randkanten der radial äußersten Gürtellage (2b) überdeckt und überragt sowie in Umfangsrichtung zumindest eine Lücke (10) aufweist,
- Seitenwänden (7) aus einem elektrisch nicht leitfähigen Gummimaterial,
**dadurch gekennzeichnet,**
**dass** die Gürtelbandage (9) zumindest einen Bandagestreifen (9b) aufweist, an dessen Unterseite zumindest ein parallel oder im Wesentlichen parallel zu seinen Festigkeitsträgern verlaufender elektrisch leitfähiger Faden (13) verläuft, und dass an der Oberseite der der radial äußersten Gürtellage (2b) elektrisch leitfähige Fäden verlaufen, welche gemeinsam mit dem Faden (13) auf der Unterseite des Bandagestreifens (9b) einen gitterartigen elektrischen Leiter bilden,
wobei entweder das elektrisch leitfähige Gummimaterial des Carboncenterbeams (12) oder die innere Laufstreifenschicht (1b) durch die zumindest eine Lücke (10) der Gürtelbandage (9) hindurch in Kontakt mit der Oberseite der radial äußersten Gürtellage (2b) ist,
und wobei der Faden (13) an der Unterseite der Gürtelbandage (9) zumindest bis in einen der Randabschnitte (9a) verläuft und bei auf einer Felge montiertem Reifen mit der Felge über elektrisch leitfähige, im Reifen befindliche Bauteile in elektrisch leitender Verbindung ist.

2. Fahrzeugluftreifen nach Anspruch 1, **dadurch gekennzeichnet, dass** die Fäden (13) an der Oberseite der radial äußersten Gürtellage (2b) parallel zueinander, unter einem spitzen Winkel von vorzugsweise bis zu 30° zu den Windungen des Fadens (13) an der Unterseite der Gürtelbandage (9) und vorzugsweise über die Breite der Gürtellage (2b) verlaufen.

3. Fahrzeugluftreifen nach Anspruch 1 oder 2, **dadurch gekennzeichnet, dass** die Fäden (13) an der Oberseite der radial äußersten Gürtellage (2b) parallel zu den Festigkeitsträgern in der Gürtellage (2b) verlaufen.

4. Fahrzeugluftreifen nach einem der Ansprüche 1 bis 3, **dadurch gekennzeichnet, dass** die Windungen des Fadens (13) an der Unterseite des Bandagestreifens (9b) sowie die Fäden (13) an der Oberseite der radial äußersten Gürtellage (2b) unter gegenseitigen lichten Abständen von 8,0 mm bis 15,0 mm verlaufen.

5. Fahrzeugluftreifen nach einem der Ansprüche 1 bis 4, **dadurch gekennzeichnet, dass** zu den elektrisch leitfähigen Bauteilen, über welche der Randabschnitt (9a) der Gürtelbandage (9) elektrisch leitend mit der Felge verbunden ist, eine elektrisch leitfähig ausgestattete bzw. ausgeführte Karkasseinlage (3) gehört, welche mit zumindest einem elektrisch leitfähigen, die Felge kontaktierenden Bauteil im Wulstbereich des Reifens in Kontakt steht.

6. Fahrzeugluftreifen nach Anspruch 5, **dadurch gekennzeichnet, dass** der Randabschnitt (9a) die elektrisch leitfähig ausgestattete bzw. ausgeführte Karkasseinlage (3) unmittelbar kontaktiert.

7. Fahrzeugluftreifen nach Anspruch 5 oder 6, **dadurch gekennzeichnet, dass** die Karkasseinlage (3) entweder eine elektrisch leitfähige Karkassgummierung oder eine elektrisch nicht leitfähige Karkassgummierung aufweist, die an ihrer Außenseite mit elektrisch leitfähigen Fäden (13) versehen ist.

8. Fahrzeugluftreifen nach einem der Ansprüche 1 bis 5 oder 7, **dadurch gekennzeichnet, dass** zu den elektrisch leitfähigen Bauteilen, über welche der Randabschnitt (9a) der Gürtelbandage (9) elektrisch leitend mit der Felge verbunden ist, ein elektrisch leitfähig ausgestatteter bzw. ausgeführter Gürtelkantenpolster (11) ist, welcher mit der elektrisch leitfähig ausgestatteten bzw. ausgeführten Karkasseinlage (3) in Kontakt ist.

9. Fahrzeugluftreifen nach Anspruch 8, **dadurch gekennzeichnet, dass** der Gürtelkantenpolster (11) die Kanten der radial innerhalb der äußersten Gürtellage (2b) angeordneten Gürtellage (2a) umgibt und einen radial inneren und einen radial äußeren Umschlagabschnitt (11a, 11b) aufweist.

10. Fahrzeugluftreifen nach Anspruch 8 oder 9, **dadurch gekennzeichnet, dass** der Gürtelkantenpolster (11) aus einem elektrisch leitfähigen Gummimaterial besteht.

11. Fahrzeugluftreifen nach Anspruch 8 oder 9, **dadurch gekennzeichnet, dass** der Gürtelkantenpolster (11) aus einem elektrisch nicht leitfähigen Gummimaterial besteht, wobei an der Außenseite des Gürtelkantenpolsters (11) zumindest ein elektrisch leitfähiger Faden (13) derart über die Umfangserstreckung des Gürtelkantenpolsters (11) verläuft, dass er zum Teil über den radial inneren und zum Teil über den radial äußeren Umschlagabschnitt (11a, 11b) verläuft.

12. Fahrzeugluftreifen mit einem Laufstreifen (1) mit einer radial inneren Laufstreifenschicht (1b) aus einem elektrisch nicht leitfähigen Gummimaterial, nach einem der Ansprüche 1 bis 11, **dadurch gekennzeichnet, dass** der Carboncenterbeam (12) einen in axialer Richtung streifenförmigen, in der inneren Laufstreifenschicht (1b) positionierten Abschnitt (12b) aufweist, dessen Gummimaterial durch eine Lücke (1) in der Gürtelbandage (9) hindurch mit Fäden (13) an der Oberseite der radial äußersten Gürtellage (2b) in Kontakt ist.

13. Fahrzeugluftreifen nach einem der Ansprüche 1 bis 12, **dadurch gekennzeichnet, dass** die elektrisch leitfähigen Fäden (13) aus einem elektrisch nicht leitfähigen Trägerfaden, beispielsweise aus Polyester, Polyamid, Baumwolle oder Hybriden dieser Materialien besteht, wobei der Trägerfaden mit einer elektrisch leitfähigen Beschichtung versehen ist.

14. Fahrzeugluftreifen nach Anspruch 13, **dadurch gekennzeichnet, dass** die elektrisch leitfähige Beschichtung elektrisch leitfähige Partikel enthält oder aus solchen besteht, wobei die elektrisch leitfähigen Partikel beispielsweise Rußpartikel, Graphitpartikel oder Kohlenstoffnanoröhren sind.

15. Fahrzeugluftreifen nach Anspruch 13 oder 14, **dadurch gekennzeichnet, dass** die elektrisch leitfähige Beschichtung ein Haftvermittler, vorzugsweise ein Resorcin-Formaldehyd-Latex-Dip ist, welcher elektrisch leitfähige Partikel, insbesondere Rußpartikel, enthält.

16. Fahrzeugluftreifen nach einem der Ansprüche 1 bis 15, **dadurch gekennzeichnet, dass** die elektrisch nicht leitfähigen Gummimaterialien und Gummierungen einen elektrischen Widerstand ≥ 10⁸ Ohm, die elektrisch leitfähigen Gummimaterialien und Gummierungen einen elektrischen Widerstand < 10⁸ Ohm aufweisen.

## Claims

1. Vehicle radial pneumatic tyre, having
- an at least two-ply tread (1) formed in the radial direction, which has an outer tread ply (1a) made of an electrically nonconductive rubber material and an inner tread ply (1b) made of an electrically conductive or an electrically nonconductive rubber material,
- a carbon centre beam (12) made of an electrically conductive rubber material in the tread (1),
- an at least two-ply belt (2) having a radially outermost belt ply (2b) with reinforcements, which are embedded in an electrically nonconductive rubber coating,
- a belt bandage (9), formed as a winding bandage, with reinforcements, which are embedded in an electrically nonconductive rubber coating, wherein the belt bandage (9) covers and projects beyond the marginal edges of the radial outermost belt ply (2b) by way of edge sections (9a) and has at least one gap (10) in the circumferential direction,
- side walls (7) made of an electrically nonconductive rubber material,
**characterized in that**
the belt bandage (9) has at least one bandage strip (9b), on the underside of which at least one electrically conductive thread (13) running parallel or substantially parallel to its reinforcements runs, and **in that** electrically conductive threads run on the upper side of the radially outermost belt ply (2b) which, together with the thread (13) on the underside of the bandage strip (9b), form a lattice-like electric conductor,
wherein either the electrically conductive rubber material of the carbon centre beam (12) or the inner tread ply (1b) is in contact with the upper side of the radially outermost belt ply (2b) through the at least one gap (10) in the belt bandage (9),
and wherein the thread (13) runs on the underside of the belt bandage (9), at least as far as one of the edge sections (9a) and when a tyre is mounted on a rim, is electrically conductively connected to the rim via electrically conductive components located in the tyre.

2. Vehicle pneumatic tyre according to Claim 1, **characterized in that** the threads (13) on the upper side of the radially outermost belt ply (2b) run parallel to one another at an acute angle of preferably up to 30° to the windings of the thread (13) on the underside of the belt bandage (9) and preferably over the width of the belt ply (2b).

3. Vehicle pneumatic tyre according to Claim 1 or 2, **characterized in that** the threads (13) on the upper side of the radially outermost belt ply (2b) run parallel to the reinforcements in the belt ply (2b).

4. Vehicle pneumatic tyre according to one of Claims 1 to 3, **characterized in that** the windings of the thread (13) on the underside of the bandage strip (9b) and the threads (13) on the upper side of the radially outermost belt ply (2b) run with mutual clear spacings of 8.0 mm to 15.0 mm.

5. Vehicle pneumatic tyre according to one of Claims 1 to 4, **characterized in that** the electrically conductive components via which the edge section (9a) of the belt bandage (9) is electrically conductively connected to the rim include an electrically conductively equipped or formed carcass inlay (3), which is in contact with at least one electrically conductive component making contact with the rim in the bead area of the tyre.

6. Vehicle pneumatic tyre according to Claim 5, **characterized in that** the edge section (9a) makes direct contact with the electrically conductively equipped or formed carcass inlay (3).

7. Vehicle pneumatic tyre according to Claim 5 or 6, **characterized in that** the carcass inlay (3) has either an electrically conductive carcass rubber coating or an electrically nonconductive carcass rubber coating, which is provided on its outer side with electrically conductive threads (13).

8. Vehicle pneumatic tyre according to one of Claims 1 to 5 or 7, **characterized in that** the electrically conductive components via which the edge section (9a) of the belt bandage (9) is electrically conductively connected to the rim include an electrically conductively equipped or formed belt edge pad (11), which is in contact with the electrically conductively equipped or formed carcass inlay (3).

9. Vehicle pneumatic tyre according to Claim 8, **characterized in that** the belt edge pad (11) surrounds the edges of the belt ply (2a) arranged radially within the outermost belt ply (2b) and has a radially inner and a radially outer turn-up section (11a, 11b).

10. Vehicle pneumatic tyre according to Claim 8 or 9, **characterized in that** the belt edge pad (11) consists of an electrically conductive rubber material.

11. Vehicle pneumatic tyre according to Claim 8 or 9, **characterized in that** the belt edge pad (11) consists of an electrically nonconductive rubber material, wherein on the outer side of the belt edge pad (11), at least one electrically conductive thread (13) runs over the circumferential extent of the belt edge pad (11) in such a way that it runs partly over the radially inner and partly over the radially outer turn-up section (11a, 11b).

12. Vehicle pneumatic tyre having a tread (1) with a radially inner tread ply (1b) made of an electrically nonconductive rubber material, according to one of Claims 1 to 11, **characterized in that** the carbon centre beam (12) has a section (12b) which is strip-like in the axial direction and positioned in the inner tread ply (1b) and of which the rubber material is in contact with threads (13) on the upper side of the radially outermost belt ply (2b) through a gap (1) in the belt bandage (9).

13. Vehicle pneumatic tyre according to one of Claims 1 to 12, **characterized in that** the electrically conductive threads (13) consist of an electrically nonconductive carrier thread, for example made of polyester, polyamide, cotton or hybrids of these materials, wherein the carrier thread is provided with an electrically conductive coating.

14. Vehicle pneumatic tyre according to Claim 13, **characterized in that** the electrically conductive coating contains or consists of electrically conductive particles, wherein the electrically conductive particles are, for example, soot particles, graphite particles or carbon nanotubes.

15. Vehicle pneumatic tyre according to Claim 13 or 14, **characterized in that** the electrically conductive coating is an adhesion promoter, preferably a resorcinol-formaldehyde-latex dip, which contains electrically conductive particles, in particular soot particles.

16. Vehicle pneumatic tyre according to one of Claims 1 to 15, **characterized in that** the electrically nonconductive rubber materials and rubber coatings have an electrical resistance ≥ 10⁸ ohms, and the electrically conductive rubber materials and rubber coatings have an electrical resistance < 10⁸ ohms.

## Revendications

1. Pneumatique de véhicule de type radial comprenant
- une bande de roulement (1) pourvue d'au moins deux couches dans la direction radiale et comportant une couche de bande de roulement extérieure (1a) en caoutchouc électriquement non conducteur et une couche de bande de roulement intérieure (1b) en caoutchouc électriquement conducteur ou non conducteur,
- un faisceau de carbone central (12) en caoutchouc électriquement conducteur dans la bande de roulement (1),
- une nappe d'armature (2) pourvue d'au moins deux couches et comportant une couche de nappe (2b) radialement la plus à l'extérieur qui comprend des renforts noyés dans un revêtement en caoutchouc électriquement non conducteur,
- un bandage de nappe (9), conçu comme un bandage enroulé, qui comprend des renforts noyés dans un revêtement en caoutchouc électriquement non conducteur, le bandage de nappe (9) recouvrant avec les portions de bord (9a) les bords de la couche de nappe (2b) radialement la plus à l'extérieur et saillant de celles-ci et comportant au moins un interstice (10) dans la direction circonférentielle,
- des parois latérales (7) en caoutchouc électriquement non conducteur,
**caractérisé en ce que**
le bandage de nappe (9) comporte au moins une bande de bandage (9b) du côté inférieur de laquelle s'étend au moins un fil électriquement conducteur (13) qui s'étend parallèlement ou sensiblement parallèlement à ses renforts, et **en ce que**
du côté supérieur de la couche de nappe (2b) radialement la plus à l'extérieur s'étendent des fils électriquement conducteurs qui forment, conjointement avec le fil (13) situé sur le côté inférieur de la bande de bandage (9b), un conducteur électrique en forme de grille,
le caoutchouc électriquement conducteur du faisceau de carbone central (12) ou la couche de bande de roulement intérieure (1b) étant en contact avec le côté supérieur de la couche de nappe (2b) radialement le plus à l'extérieur en traversant l'au moins un interstice (10) du bandage de nappe (9),
et
le fil (13) s'étendant du côté inférieur du bandage de nappe (9) au moins jusque dans l'une des portions de bord (9a) et, lorsque le pneumatique est monté sur une jante, ledit fil étant en liaison électrique avec la jante par le biais de composants électriquement conducteurs situés dans le pneumatique.

2. Pneumatique de véhicule selon la revendication 1, **caractérisé en ce que** les fils (13), situés du côté supérieur de la couche de nappe (2b) radialement la plus à l'extérieur, s'étendent parallèlement les uns aux autres, selon un angle aigu allant de préférence jusqu'à 30° par rapport aux enroulements du fil (13) sur le côté inférieur du bandage de nappe (9) et de préférence sur la largeur de la couche de nappe (2b).

3. Pneumatique de véhicule selon la revendication 1 ou 2, **caractérisé en ce que** les fils (13), situés du côté supérieur de la couche de nappe (2b) radialement la plus à l'extérieur, s'étendent parallèlement aux renforts de la couche de nappe (2b).

4. Pneumatique de véhicule selon l'une des revendications 1 à 3, **caractérisé en ce que** les enroulements du fil (13) du côté inférieur de bande de bandage (9b), et les fils (13) du côté supérieur de la couche de nappe (2b) radialement la plus à l'extérieur, s'étendent à des distances d'espacement mutuelles allant de 8,0 mm à 15,0 mm.

5. Pneumatique de véhicule selon l'une des revendications 1 à 4, **caractérisé en ce que** les composants électriquement conducteurs, par le biais desquels la portion de bord (9a) du bandage de nappe (9) est reliée de manière électriquement conductrice à la jante, possèdent une couche de carcasse intérieure (3) qui est équipée ou réalisée de manière électriquement conductrice et qui est en contact, dans la région du talon du pneumatique, avec au moins un composant électriquement conducteur en contact avec la jante.

6. Pneumatique de véhicule selon la revendication 5, **caractérisé en ce que** la portion de bord (9a) est directement en contact avec la couche de carcasse intérieure (3) équipée ou réalisée de manière électriquement conductrice.

7. Pneumatique de véhicule selon la revendication 5 ou 6, **caractérisé en ce que** la couche de carcasse intérieure (3) est soit un revêtement de caoutchouc de carcasse électriquement conducteur soit un revêtement de caoutchouc de carcasse électriquement non conducteur qui est pourvu sur son côté extérieur de fils (13) électriquement conducteurs.

8. Pneumatique de véhicule selon l'une des revendications 1 à 5 ou 7, **caractérisé en ce que** les composants électriquement conducteurs, par le biais desquels la portion de bord (9a) du bandage de nappe (9) est reliée électriquement à la jante, possèdent un coussin de bord de nappe (11) qui est équipé ou exécuté de manière électriquement conductrice et qui est en contact avec la couche de carcasse intérieure (3) équipée ou réalisée de manière électriquement conductrice.

9. Pneumatique de véhicule selon la revendication 8, **caractérisé en ce que** le coussin de bord de nappe (11) entoure les bords de la couche de nappe (2a) disposée radialement à l'intérieur de la couche de nappe (2b) la plus à l'extérieur et comporte des portions radialement intérieure et extérieure (11a, 11b).

10. Pneumatique de véhicule selon la revendication 8 ou 9, **caractérisé en ce que** la portion de bord de nappe (11) comprend un caoutchouc électriquement conducteur.

11. Pneumatique de véhicule selon la revendication 8 ou 9, **caractérisé en ce que** le coussin de bord de nappe (11) comprend un caoutchouc électriquement non conducteur, au moins un fil conducteur (13) s'étendant du côté extérieur du coussin de bord de nappe (11) sur l'extension circonférentielle du coussin de bord de nappe (11) de façon à s'étendre sur les portions d'enveloppe (11a, 11b), en partie sur celle radialement intérieure et sur celle radialement extérieure.

12. Pneumatique de véhicule comprenant une bande de roulement (1) pourvue d'une couche de bande de roulement radialement intérieure (1b) en caoutchouc électriquement non conducteur, selon l'une des revendications 1 à 11, **caractérisé en ce que** le faisceau de carbone central (12) comporte une portion (12b) en forme de bande dans la direction axiale qui est positionnée dans la couche de bande de roulement (1b) et dont le caoutchouc est en contact avec des fils (13) du côté supérieur de la couche de nappe (2b) radialement la plus à l'extérieur en traversant un interstice (1) du bandage de nappe (9).

13. Pneumatique de véhicule selon l'une des revendications 1 à 12, **caractérisé en ce que** les fils (13) électriquement conducteurs comprennent un fil porteur électriquement non conducteur, par exemple en polyester, en polyamide, en coton ou en des hybrides de ces matières, le fil porteur étant pourvu d'un revêtement électriquement conducteur.

14. Pneumatique de véhicule selon la revendication 13, **caractérisé en ce que** le revêtement électriquement conducteur contient ou est formé de particules électriquement conductrices, les particules électriquement conductrices étant par exemple des particules de suie, des particules de graphite ou des nanotubes de carbone.

15. Pneumatique de véhicule selon la revendication 13 ou 14, **caractérisé en ce que** le revêtement électriquement conducteur est un promoteur d'adhérence, de préférence un bain de latex de résorcinol-formaldéhyde-latex contenant des particules électriquement conductrices, en particulier des particules de suie.

16. Pneumatique de véhicule selon l'une des revendications 1 à 15, **caractérisé en ce que** les caoutchoucs et revêtements de caoutchouc électriquement non conducteurs ont une résistance électrique ≥ 10⁸ ohms et les caoutchoucs et revêtements de caoutchouc électriquement conducteurs ont une résistance électrique < 10⁸ ohms.
